# EUROPEAN PATENT APPLICATION

(11) **EP 1 013 851 A1**
(43) Date of publication of application: **28.06.2000**
(21) Application number: 98830752.6
(22) Date of filing: 14.12.1998
(51) Int. Cl.: E04G 23/02, G01B 7/16

(54) **Process for manufacturing a structural reinforcing element for building constructions and structural reinforcing element so obtained**

(71) Applicant: Top Glass S.p.A., 20096 Pioltello, Milano (IT)
(72) Inventor: Branca, Alfonso, 20145 Milano (IT); Preti, Cassio, 21013 Gallarate (Varese) (IT)
(74) Representative: Sutto, Luca, Ing.

(57) **Abstract**

A structural reinforcing element (1) for building constructions is described, which comprises a main body (5) made up of a matrix of plastic resin (6) in which continuous reinforcing fibres (7), glass fibres or carbon fibres for example, are buried, as well as a continuous sensor element (8) placed parallelly of the reinforcing fibres and preferably consisting of one or more optical fibres or other sensors. The invention also relates to a process for manufacturing the above described reinforcing element (1), according to which the continuous reinforcing fibres (7) and the optical fibre forming the sensor element (8) are provided to be handled from respective feeding stations (10,12) towards an impregnation station (11) to receive the appropriate amount of resin (13) and subsequently towards a forming station (17); downstream of said forming station the obtained continuous semifinished product is soldified by polymerization and is then submitted to a transverse-cutting operation thereby obtaining a plurality of reinforcing elements (1) of predetermined longitudinal extension.

## Description

The present invention relates to a process for manufacturing a structural reinforcing element for building constructions, as well as to a reinforcing element obtained by such a process.

It is known that building structures of various nature such as bridges, viaducts, tunnels, containment walls, posts and similar supporting elements may require structural reinforcing works in the course of their operating life.

Typically, a need for a restoration work or a structural reinforcement work is caused by an increasing decay of the building construction and occurrence of a structural inadequacy of the latter to fulfill increasingly heavier burdens than those for which it had been originally conceived.

The reasons for a structural decay can be found in planning faults, a wrong selection of the construction techniques or materials, a bad execution of the work, environmental attacks, structural overloads.

The last-mentioned case occurs above all when relatively old constructions intended for vehicle circulation are concerned, as presently vehicles are surely greater in number and of bigger loads than some ten years ago.

In order to carry out appropriate reinforcing interventions on building constructions, it is first of all necessary to examine the damage typology and therefore the conditions of the work or construction to be submitted to a structural reinforcement, and to evaluate both the static and dynamic behaviour of this construction in a precise manner before applying reinforcing structures thereto.

In this way, it will be possible to verify the conditions and regions where the biggest deteriorations have occurred or where at all events a reinforcing intervention is required due to an inadequate behaviour towards loads by the building construction under examination.

Presently, once the chemical state has been analysed, as well as the static and dynamic behaviour of the building structure being treated, application of the different reinforcing elements is carried out substantially following two modalities:
a) Gluing of plates to the damaged structure (plate bonding);
b) Bonding of confining fabrics to the damaged structure or the structure to be reinforced (wrapping).

In the first case, after the surface to which the reinforcing element is to be applied has been carefully cleaned and arranged, deposition of a layer of adhesive material is carried out followed by application of a plate that may be of a steel material or, alternatively, of an appropriate composite material.

It is to note that when steel plates are used, it is then necessary to carry out application of a protection layer in order to avoid the reinforcing element being submitted to undesired atmospheric attacks.

Alternatively, when the wrapping technology is used, application of textile manufactured articles is carried out, which manufactured articles are impregnated with appropriate resins at the region where the structural reinforcing work is required to be executed.

Once application of the reinforcing element, consisting of a plate of composite material such as a carbon fibre in an epoxy resin matrix for example, has been carried out, and structural fastening of the reinforcing element to the building construction submitted to treatment has been completed, the structural contribution given by the reinforcement to the building construction is required to be checked, both from a static and a dynamic point of view.

There is then a requirement for associating sensors with the reinforcing element, which sensors must be capable of detecting the strains or deformations to which the reinforcing element itself is submitted, once the building construction is burdened with the conventional operating loads or appropriate test loads.

It is apparent that the requirement of verifying the structural behaviour of a reinforced building construction may occur several times in the operating life of the construction in question; in addition, continuous monitoring of the sections considered as critical of the work submitted to a structural-reinforcement treatment would be desirable.

Presently, in order to meet this type of requirements, after the plate made of steel or composite material has been applied, application of a strain sensor, such as a conventional strain gauge or a sensor of the optical type, to the plate itself can be carried out.

Application of a sensor member to the reinforcing element involves addition of further operating steps to the process for structural restoration of the building construction on which the reinforcing work is being carried out, as well as a need for very careful staff, skilled in sensor installation.

In fact, a wrong installation would give rise to an unreliable monitoring of the structural behaviour of the reinforced building construction.

In addition, by using normal sensor elements without any protection, it is apparent that these sensors too can be submitted to attacks from the external environment or mechanical interferences that impair the functional character thereof.

In an attempt to solve this type of drawbacks, sensors have been recently spread that in particular consist of optical fibres enclosed in sheaths of plastic material ensuring an appropriate protection of same both against weathering and possible mechanical interferences and, at the same time, improving the capability of manipulating the sensor member and therefore facilitating the steps for installation of the latter.

While these sensors have been commercially successful in particular for application in rearrangements of degraded civil works, some important drawbacks are however to be signalled.

First of all, from an operating point of view, optical fibres or other strain sensors incorporated into wrapping structures show a relatively poor capability of following the deformations to which the reinforced building structure is submitted, in a precise manner.

It is in fact to note that since the sensor is housed in a capsule or sheath, it can be submitted to sliding actions taking place between an outer surface of same and the inner surface of the sheath.

In addition, since the sheath is in turn fastened by gluing to the surface of the reinforcing element, there is a further surface of possible sliding represented by the interface between the sheath and the anchoring surface for the reinforcing element itself.

In particular, since there are two connections, one between the sensor and the envelope for housing the sensor itself and the other between the sensor-housing envelope and the structural reinforcing element, surely readings with much more errors as compared with the case in which a fibre directly connected to the reinforcing element is used, may be present.

This type of problems that clearly may cause a mistake in reading, will be much more marked in the case of sensor-housing sheaths made of different materials from those forming the structural reinforcing element.

In case of use of materials having even slightly different thermal expansion coefficients, further complications and mistakes will be present on reading the deformation signals, due to a different behaviour against sudden changes of temperature by the material forming the sensor-housing envelope relative to the behaviour of the material forming the structural reinforcing plate.

In addition to the above listed problems, the economical aspect is not to be forgotten.

In fact, sensors provided with a protection envelope are surely of easier use than similar sensors without protections, while on the other hand in the first case a greater intrinsic cost of the sensor device is involved.

Under this situation, it is an object of the present invention to provided a process for manufacturing a structural element for building constructions, as well as a structural element so obtained capable of offering a valid solution to all the above mentioned drawbacks.

In particular, it is an important object of the invention to provide a process enabling a structural element to be obtained at reduced production costs, which element is capable of combining a maximum operating efficiency from a structural point of view with a high reliability in supplying indications relative to the deformation state of the structural element itself under load.

It is a further object of the invention to offer a structural reinforcing element for building constructions that can be also used in highly aggressive environments without the risk of damages and without any possibility of being easily made inoperative by accidental impacts or mechanical interferences.

It is another object of the invention to offer a reinforcing element which is capable of operating with the greatest reliability even in the case of frequent and important sudden changes of temperature.

It is a still further object of the invention to offer a structural element minimizing the possibilities of human mistakes, in particular at the moment of installation.

The foregoing and further objects that will become more apparent in the course of the present description are substantially achieved by a process for manufacturing a reinforcing element and a reinforcing element so obtained, in accordance with the appended claims.

Further features and advantages will be best understood from the detailed description of a preferred, non-exclusive, embodiment of a reinforcing element and the related manufacturing process in accordance with the invention. Such a description will be taken hereinafter with reference to the accompanying drawings, given by way of non-limiting example, in which:

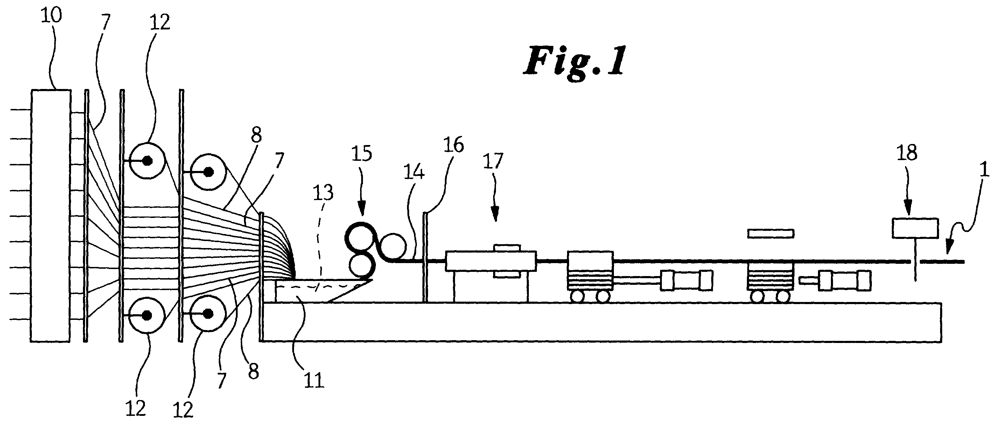

- Fig. 1 diagrammatically shows a plant for manufacturing a structural reinforcing element in accordance with the invention;
- Fig. 2 is a diagrammatic perspective view of a structural reinforcing element in accordance with the present invention;
- Fig. 2a shows a detail of Fig. 2 to an enlarged scale;
- Fig. 3 shows a possible use of the element in Fig. 2 for stiffening of a beam.

With reference to the drawings, a structural reinforcing element for building constructions in accordance with the invention has been generally identified by reference numeral 1.

In particular, the structural reinforcing element in reference can be used for structural reinforcing of constructions such as bridges, viaducts, tunnels, containment walls, posts and the like that have suffered from a progressive decay or showing a structural inadequacy to heavier loads in respect of those for which the construction itself had been originally conceived.

By way of example, shown in Fig. 3 is a structural reinforcing element 1 in accordance with the invention, applied to a region 2 of a beam 3 where a damage 4 is diagrammatically shown which has weakened the beam features of resistance to loads.

The reinforcing element 1 comprises a main body 5 having a matrix 6 made of a predetermined synthetic resin, polyester for example, and a plurality of reinforcing fibres 7 buried in the matrix 6 and comprising glass fibres, carbon fibres, aramidic fibres for example and fibres of still other nature but capable of giving the main body the desired structural features.

Obviously matrix 6 will be defined by any appropriate plastic material both of the thermoplastic and of the thermosetting types.

Typically, the reinforcing fibres 7 are adapted to stiffen the main body by greatly increasing the mechanical features thereof without impairing lightness typical of plastic materials.

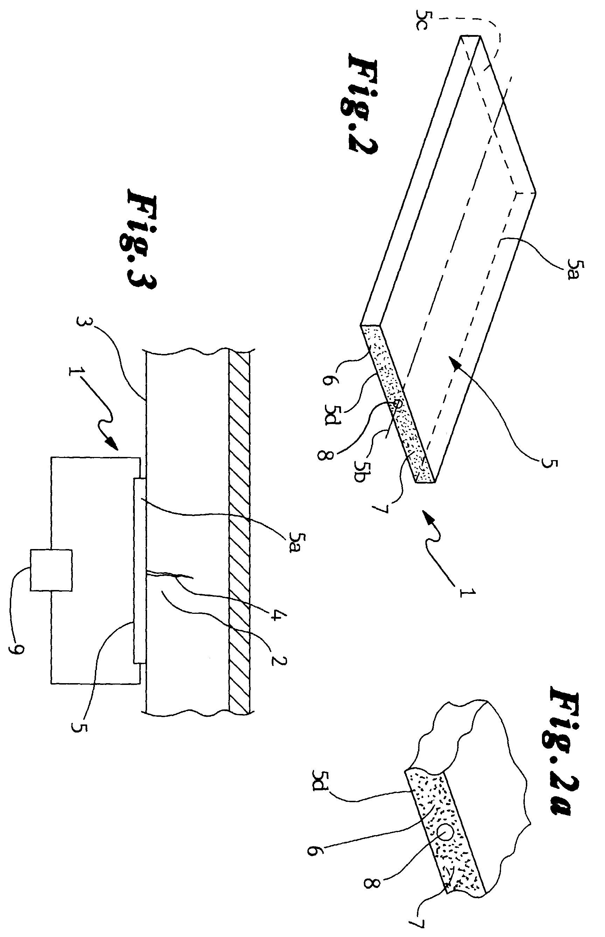

The main body 5 has an attachment surface 5a (consisting of the upper surface in the case of Figs. 2, 3) intended for engagement with a predetermined region 2 of the building construction submitted to the reinforcing treatment.

In Fig. 3 this region is an area where a damage 4 is present that has partly jeopardized the structural continuity of the beam 3 with which the reinforcing element 1 is engaged.

The reinforcing element 1 in accordance with the invention also comprises a sensor element 8 associated with the main body and arranged to detect strains of the main body when a load weighs on the building construction with which the structural element is in engagement.

It is in fact to note that, typically, the structural reinforcing element is linked, by gluing with appropriate adhesive materials, to the surface of the building construction adapted to receive the intervention for restoration or structural improvement.

In order to enable the behaviour to stresses to which the building construction is submitted to be monitored in time, and in particular for the purpose of knowing the contribution that the structural reinforcing element has given to the building construction, the presence of a sensor element is important; this sensor element, connected by appropriate signal transducers to suitable control members diagrammatically identified by block 9 in Fig. 3, is capable of producing a signal proportional to the deformation state locally suffered by the building construction and therefore by the reinforcing element in engagement therewith.

In accordance with the invention, the sensor element is advantageously incorporated into the plastic matrix of the main body so that it is mechanically connected with the latter without further connecting materials such as adhesives and the like being required between the sensor itself and the main body.

In addition, advantageously, since the sensor is completely buried in the matrix of synthetic resin, it is protected from any external agent both of the chemical and the mechanical types.

In more detail, it is to point out that the reinforcing fibres 7 within the matrix 6 of the main body 5 are elongated, continuous and are disposed in mutual side by side relationship along the main body; more specifically, these reinforcing fibres are substantially parallel and extend through the main body between opposite ends of the latter.

In a similar way, the sensor element 8 too is made of a continuous elongated body disposed in side by side relationship parallelly of the reinforcing fibres 7 along the main body 5. Practically, this sensor element has a side surface completely buried in the synthetic resin matrix and therefore coated with the latter, as well as opposite ends appearing at the end faces of the main body.

Preferably and advantageously, the main body is obtained by pultrusion in such a manner that both the sensor element and reinforcing fibres are concurrently buried in the synthetic resin matrix directly during the step of pultruding the main body.

It is to note that the sensor element is preferably of the optical type and more specifically it consists of at least one continuous optical fibre that can be easily and readily fed concurrently with the reinforcing fibres during the pultrusion process, as better clarified in the following.

The sensor element is provided to be defined by a plurality of parallelly-disposed optical fibres (7, 8 or more fibres, for example) previously connected with each other by incorporation into an auxiliary plastic matrix.

In this manner, the different optical fibres will be able to define a ribbon to be incorporated into the plastic matrix of the main body.

Should the sensor be made up of several previously assembled fibres forming a ribbon or the like, each optical fibre may be provided with a respective reflecting element placed at the point where the deformation state is wished to be known.

By use of several optical fibres and reflecting elements located at different distances from one end of the reinforcing element, deformation of the building construction at different regions can be evaluated.

Alternatively, the sensor may comprise a continuous metal element (a copper wire for example) such acting as to vary its own electric and/or magnetic features if submitted to deformation.

Still from a structural point of view it is to note that, when the main body 5 is made by pultrusion, it appears as a section member having a predetermined longitudinal extension axis 5b parallelly of which the reinforcing fibres 7 and the sensor element are exactly disposed, said sensor element extending from a first end face 5c of the main body to a second end face 5d opposite to the first face of the main body itself.

A process for manufacturing a reinforcing element 1 for building constructions described above mainly as regards structure substantially involves the following steps.

In a first step, a predetermined number of reinforcing fibres 7, glass fibres for example, are handled along a predetermined path of travel from one or more feeding stations 10 to an impregnation station 1.

Simultaneously, the continuous sensor element or elements 7, one or more optical fibres for example, are fed from respective stations 12 towards the impregnation station.

Said impregnation station is made of one or more impregnation vats where a synthetic resin, a plastics resin for example, in a liquid state 13 is housed, which resin will impregnate the reinforcing fibres 7 and optical fibres 8 forming the sensor element or elements to be then incorporated into the main body.

Once impregnation of the reinforcing fibres and sensor element with the plastic resin has been carried out, the compact continuous article of manufacture 14 thus obtained is preferably sent to a wringing station 15 where elimination of possible excess resin amounts is carried out.

Subsequently, the reinforcing fibres and sensor element are sent to a guide station 16 to define the correct and desired transverse positioning both of the fibres and the sensor element upstream of a forming station 17 defining the transverse shape of the continuous semifinished product incorporating the sensor element.

It is to note that, as an alternative solution to the above description, impregnation may be provided to directly take place by injection of resin with an appropriate pressure at the forming station or mould.

In this case impregnation and forming substantially occur in a single step.

On coming out of the forming station, which may comprise pre-shaping moulds and subsequent shaping moulds, the continuous semifinished product is caused to solidify through chemical, electromagnetic, optical or thermal polymerization and is then transversely cut (station 18) to obtain a plurality of structural reinforcing elements of predetermined longitudinal extension.

From the point of view of its operating use, the structural reinforcing element is of simple application, in that it is sufficient to cause engagement between the attachment surface provided on the main body and the corresponding anchoring region provided on the building construction to be reinforced, after cleaning of the mutual-contact surfaces and interposition of an appropriate adhesive resin.

Therefore subsequent application of a sensor member is no longer required in that said sensor member is directly incorporated into the plastics matrix of the structural reinforcing element.

Even more important is the fact that no operation for coating or protecting the sensor element is required any longer because the matrix itself incorporating the reinforcing fibres creates an appropriate protection for the sensor.

The advantages of the above described embodiment are therefore well apparent.

Substantially all drawbacks typical of the known art have been overcome by a process and a product which are very cheap and of easy setting up.

In addition, in spite of the reduction in the production costs, the obtained product is practically devoid of the drawbacks typical of the traditional products in terms of operating reliability and easy installation.

## Claims

1. A structural reinforcing element for building constructions, comprising:
- a main body (5) having a matrix (6) made of a predetermined synthetic resin and a plurality of reinforcing fibres (7) buried in said matrix, this main body having at least one attachment surface (5a) intended for engagement with a predetermined region of the building construction submitted to reinforcing and/or restoration treatment; and
- at least one sensor element (8) operatively associated with the main body (5) to detect strains or deformations in said main body and consequently strains or deformations in said predetermined region of the building construction with which the body (5) is associated, characterized in that the sensor element (8) is incorporated into the plastics matrix (6) of the main body (5).

2. A structural reinforcing element as claimed in claim 1, characterized in that the reinforced fibres (7) are elongated and placed in mutual side by side relationship along the main body.

3. A structural reinforcing element as claimed in anyone of the preceding claims, characterized in that the reinforcing fibres (7) are continuous and substantially disposed parallelly of each other along the main body.

4. A structural reinforcing element as claimed in anyone of the preceding claims, characterized in that said sensor element (8) comprises at least one continuous elongated body placed in side by side relationship with the reinforcing fibres (7) along the main body.

5. A structural reinforcing element as claimed in claim 4, characterized in that the main body (5) is obtained by pultrusion, said sensor element (8) and reinforcing fibres (7) being concurrently buried in the synthetic matrix during the step of pultruding the main body.

6. A structural reinforcing element as claimed in anyone of the preceding claims, characterized in that said sensor element (9) is either of the optical type, of the electric type or of the magnetic type.

7. A structural reinforcing element as claimed in claim 6, characterized in that said sensor element comprises at least one optical fibre.

8. A structural reinforcing element as claimed in claim 6, characterized in that the sensor element comprises a plurality of optical fibres previously assembled in an auxiliary matrix of synthetic resin in turn buried in said matrix of the main body.

9. A structural reinforcing element as claimed in anyone of the preceding claims, characterized in that said main body (5) is a section member having a predetermined axis of longitudinal extension (5b) parallelly of which said reinforcing fibres and sensor element are disposed, which sensor element extends from a first end face (5c) to a second end face (5d) opposite to the first face of said main body.

10. A structural reinforcing element as claimed in anyone of the preceding claims, characterized in that said sensor element (8) is housed in the synthetic matrix of the main body.

11. A process for manufacturing a structural reinforcing element for building constructions preferably of the type described in anyone of the preceding claims, said process being characterized by comprising the following steps:
- handling a predetermined number of reinforcing fibres and at least one elongated sensor element from corresponding feeding stations (10, 12) towards at least one impregnation station (11);
- impregnating the reinforcing fibres and elongated sensor element with a predetermined synthetic resin (13);
- shaping said impregnated reinforcing fibres and sensor element at a forming station to obtain a continuous semi-finished product (14) incorporating the continuous sensor element;
- solidifying said continuous semi-finished product;
- transversely cutting the continuous semi-finished product to obtain a plurality of structural reinforcing elements (1) of predetermined longitudinal extension.

12. A process as claimed in claim 11, characterized in that said continuous sensor element comprises at least one continuous optical fibre.

13. A process as claimed in the preceding claim, characterized in that the continuous sensor element comprises a plurality of continuous optical fibres.

14. A process as claimed in the preceding claim characterized in that before said forming step, a step is provided in which the reinforcing fibres and sensor element are sent towards a guide station (16) to define the transverse positioning of the reinforcing fibres and sensor element in the section of the main body.

15. A process as claimed in claim 11, characterized in that said impregnation step substantially takes place at the forming station by injection of said synthetic resin.
